(19) Europäisches Patentamt

European Patent Office

Office européen des brevets

(11) **EP 1 185 349 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(21) Anmeldenummer: **00938663.2**

(22) Anmeldetag: **20.05.2000**

(51) Int Cl.:
*B01D 39/04* *(2006.01)*        *D21H 27/08* *(2006.01)*
*B01J 41/16* *(2006.01)*

(86) Internationale Anmeldenummer:
**PCT/EP2000/004589**

(87) Internationale Veröffentlichungsnummer:
**WO 2000/072940 (07.12.2000 Gazette 2000/49)**

(54) **FILTER AUS FILTERPAPIER ODER PAPIERARTIGEM VLIESSTOFF**

FILTERS CONSISTING OF FILTER PAPER OR PAPER-TYPE NONWOVEN MATERIAL

FILTRES EN PAPIER OU EN NON TISSE DE TYPE PAPIER

(84) Benannte Vertragsstaaten:
**AT BE CH CY DE DK ES FI FR GB GR IE IT LI LU MC NL PT SE**

(30) Priorität: **28.05.1999 DE 19924435**

(43) Veröffentlichungstag der Anmeldung:
**13.03.2002 Patentblatt 2002/11**

(73) Patentinhaber: **Körber, Helmut**
**06114 Halle/S. (DE)**

(72) Erfinder:
• **PIESCHEL, Friedemann**
**D-06766 Wolfen (DE)**
• **LANGE, Eckehard**
**D-06846 Dessau (DE)**
• **KNIELING, Michael**
**D-10179 Berlin (DE)**

(74) Vertreter: **Tragsdorf, Bodo**
**Patentanwalt**
**Heinrich-Heine-Strasse 3**
**06844 Dessau (DE)**

(56) Entgegenhaltungen:
WO-A-99/28372          GB-A- 838 973
GB-A- 899 284          GB-A- 914 421
US-A- 3 658 790

## Beschreibung

Die Erfindung betrifft Filter aus Filterpapier oder aus papierartigem Vliesstoff, die teilweise oder vollständig aus faserförmigem cellulosehaltigem Material bestehen.

Filterpapier ist aus Zellstoff, Kunststoff- oder Glasfasern hergestelltes Papier für die Filtration in Haushalt, Technik und für Analysen. Papierartige Vliesstoffe sind Verbundstoffe aus faserförmigem cellulosehaltigem Material. Aus Filterpapier oder papierartigem Vliesstoff werden z.B. Filtertüten oder durch Wickeln oder Falten Filterpatronen hergestellt. Die so hergestellten Filter werden nach einmaligem Gebrauch weggeworfen. Bei den als Wegwerfartikel zur Anwendung kommenden Filtern ist es erstrebenswert, daß diese aus Umweltschutzgründen biologisch abbaubar sind. Dies wird aber nur erreicht, wenn die Filter ausschließlich aus Cellulose bestehen.

Im allgemeinen dienen Filter zum Abtrennen von Feststoffpartikeln von Gasen oder Flüssigkeiten. Insbesondere bei der Filtration wäßriger Medien ist es jedoch häufig erstrebenswert, auch bestimmte Ionen mit abzutrennen, entweder um einen zusätzlichen Reinigungseffekt zu erzielen, oder eine Anreicherung im Filterpapier zu erzielen. Das betrifft besonders toxische Schwermetalle sowie Härtebildner im Trinkwasser und die Konzentrierung von Metallspuren aus größeren Wasserproben zur einfacheren analytischen Erfassung.

Bisher sind keine Fasern für Filtermaterialien bekannt, die einerseits eine ausreichende Kapazität zur Aufnahme von Härtebildnern aufweisen, um bei üblichen Wasserhärten eine nennenswerte Verbesserung bei der Getränkebereitung zu leisten und andererseits Schwermetalle hinreichend fest zu binden, um bei den möglichen geringen Konzentrationen eine merkliche Geschmacksverbesserung zu bewirken. Handelsübliche Systeme zur Verbesserung der Trinkwasserqualität haben daher als Kernstück eine mit Ionenaustauschern gefüllte Patrone. Derartige Patronen bringen aber bekanntlich Probleme durch die Vermehrung von Keimen, wenn das wassergefüllte System nicht durchströmt wird und belasten die Umwelt durch ihr nur unvollständig zu realisierendes Recycling.

Der Erfindung lag die Aufgabe zugrunde, Filter aus Filterpapier oder papierartigem Vliesstoff zu schaffen, die sich durch eine hohe Filterkapazität auszeichnen und zusätzlich in der Lage sind, unerwünschte Fremd- oder Begleitstoffe im Filtermedium, wie z.B. Härtebildner oder Schwermetalle, aufzunehmen und zu binden. Ferner ist es Aufgabe der Erfindung geeignete Verfahrensweisen zur Herstellung der Filter zu schaffen.

Erfindungsgemäß wird die Aufgabe durch die im Anspruch 1 angegebenen Merkmale gelöst. Die Merkmale zu den vorgeschlagenen Verfahrensweisen zur Herstellung der Filter sind Gegenstand der Ansprüche 2 bis 13.

Die Filter aus Filterpapier oder papierartigem Vliesstoff bestehen teilweise oder vollständig aus faserförmigem cellulosehaltigem Material. Durch eine spezielle Behandlung des cellulosehaltigen Materials, entweder vor oder nach der Herstellung des Filterpapiers, werden die Eigenschaften der Filter wesentlich verbessert. Erfindungsgemäß erfolgt die Behandlung derart, daß das cellulosehaltige Material zumindest teilweise mit Harnstoff bis zu einem in Aminomethansäureestergruppen (Carbamidgruppen) gebundenen Stickstoffgehalt von 1 bis 4 Masse% carbamidiert und mit Phosphorsäure oder Ammoniumphospat bis zu einem Phosphorgehalt von 3 bis 8 Masse% phosphoryliert ist.

Aus so modifiziertem cellulosehaltigem Material hergestellte Filter besitzen außer einer hohen Filterkapazität zusätzlich noch die besonderen Eigenschaften, Härtebildner sowie toxische und geschmacksbeeinträchtigende Schwermetalle zu binden. Durch diese Behandlung wird auch eine verbesserte Quellbarkeit der Cellulosefasern und dadurch ein breiteres Anwendungsgebiet für die Filter erreicht. Diese können bevorzugt zur Abtrennung mechanischer Verunreinigungen aus Flüssigkeiten und Gasen eingesetzt werden. Im Falle zu filtrierender wäßriger Lösungen besitzen die Filter die vorteilhafte Eigenschaft, die Kationen ionenbildender Verunreinigungen gegen Natrium oder Ammoniumionen auszutauschen. Aufgenommen werden insbesondere mehrwertige Kationen (Härtebildner, Schwermetalle usw.) aber auch kationische Tenside, quarternäre organische Ammoniumverbindungen usw.. Andere Einsatzgebiete sind die Entstaubung, Wassertechnik, insbesondere in Wasserleitungen, als Luft-, Kaffee-, Rauch- oder Staubfilter. Aus den behandelten Cellulosefasern können in an sich bekannter Weise Filterpapier oder papierartiger Vliesstoff entweder ausschließlich aus Cellulosefasern oder in Abmischungen mit anderen geeigneten Ausgangsstoffen für derartige Filter, wie z.B. Kunststoffen oder Glasfasern, hergestellt werden.

Aus dem Filterpapier oder dem papierartigen Vliesstoff können dann unterschiedliche Arten von Filtern produziert werden, wie z.B. Filtertüten oder Patronenfilter. Die Filter werden in der Regel als Einwegfilter verwendet. Filter, die ausschließlich aus Cellulose und/oder dem erfindungsgemäß modifizierten cellulosehaltigen Material bestehen, haben den Vorteil, daß sie biologisch vollständig abbaubar sind.

Als Cellulosefasern können alle für die Papierherstellung geeigneten Fasern mit einem hohen Cellulosegehalt, wie z.B. Baumwoll-Linters, Sulfat- und Sulfit-Zellstoffe aus verschiedenen Hölzern, Recyclingfasern aus Altpapier, eingesetzt werden.

Hinsichtlich der durchzuführenden Phosphorylierungs- und Carbamidierungsreaktionen ergeben sich folgende Möglichkeiten:

- Behandlung des gesamten cellulosehaltigen Ausgangsmaterials vor der Herstellung des Filterpapiers oder des papierhaltigen Vliesstoffes;

- Behandlung einer Teilmenge des erforderlichen Ausgangsmaterials an Cellulose vor der Herstellung des Filterpapiers bzw. des papierartigen Vliesstoffes und nachfolgendem Abmischen dieser Teilmenge mit unbehandeltem cellulosehaltigem Fasermaterial und

- Herstellung des Filterpapiers oder des papierartigen Vliesstoffes in an sich bekannter Art und Weise und nachträgliche Behandlung der Filterpapier- oder Vliesstoffbahn durch die Phosphorylierung und Carbamidierung.

In Abhängigkeit vom Einsatzzweck der Filter können verschiedene Phosphorylierungs- und Carbamidierungsgrade innerhalb der angegebenen Bereichsgrenzen für den Stickstoff- und den Phosphorgehalt eingestellt werden.

Die Phosphorylierung und Carbamidierung des cellulosehaltigen Ausgangsmaterials für die Herstellung des Filterpapiers oder des papierartigen Vliesstoffes wird unter folgenden Bedingungen durchgeführt.

Wesentlich ist, daß das cellulosehaltige Fasermaterial vor der Phosphorylierungs- und Carbamidierungsreaktion in eine besonders reaktionsfähige Form gebracht wird. Diese sogenannte Aktivierung erfolgt durch Einstellen des Feuchtigkeitsgehaltes des cellulosehaltigen Materials, indem diesem Wasser in einer Menge von mindestens 30 Masse% des cellulosehaltigen Materials zugesetzt wird. Das cellulosehaltige Ausgangsmaterial hat üblicherweise bereits einen Wassergehalt von 5 bis 25 %. Um die gewünschte Aktivierung zu erreichen, ist es erforderlich, daß das cellulosehaltige Fasermaterial über einen längeren Zeitraum der Einwirkung von Wasser ausgesetzt wird. Die Zeitdauer ist im wesentlichen abhängig vom bereits vorliegenden Feuchtigkeitsgehalt des Materials und beträgt mindestens eine halbe Stunde.

Die Reaktionspartner Phosphorsäure oder Ammoniumphosphat und Harnstoff müssen in das cellulosehaltige Material so eingemischt werden, daß diese nach Beendigung des Mischprozesses gleichmäßig verteilt vorliegen. Neben der erwähnten Aktivierung ist besonders auf eine gleichmäßige Verteilung der Reaktionspartner in dem cellulosehaltigen Fasermaterial zu achten.

Vorzugsweise wird dem aktivierten cellulosehaltigen Material zuerst die Phosphorsäure oder Ammoniumphosphat zugesetzt und gleichmäßig verteilt und anschließend der Harnstoff. Die Mischzeiten zum Einmischen von Phosphorsäure oder Ammoniumphosphat und Harnstoff betragen jeweils mindestens 15 Minuten. Die Reaktionskomponenten Phosphorsäure oder Ammoniumphosphat und Harnstoff können auch bei Raumtemperatur mit dem cellulosehaltigen Material vermischt werden.

Eine unbedingte Notwendigkeit der Einhaltung einer bestimmten Reihenfolge bei der Zugabe der Reaktionspartner besteht nicht.

Die Aktivierung kann vorteilhaft mit dem Vermischen mit Harnstoff und Phosphorsäure und/oder Ammoniumphosphat kombiniert werden. Aus den zuzusetzenden Mengen an Harnstoff und Phosphorsäure und/oder Ammoniumphosphat und der für die Aktivierung vorbestimmten Wassermenge wird dazu gegebenenfalls unter Erwärmen bis auf eine Temperatur von 60°C eine klare Lösung dieser Komponenten gebildet, die an Stelle von Wasser zur Aktivierung des cellulosehaltigen Fasermaterials eingesetzt wird. Das cellulosehaltige Material kann vor der Aktivierung auf die Temperatur der Lösung von Harnstoff und Phosphorsäure oder Ammoniumphosphat in Wasser erwärmt werden.

Während der Aktivierungszeit muß darauf geachtet werden, daß kein Wasserverlust eintritt.

Ein wesentlicher Verfahrensschritt besteht darin, daß vor der eigentlichen Phosphorylierung und Carbamidierung die im Reaktionsgemisch zwecks Aktivierung vorhandene Feuchtigkeit nahezu vollständig ausgetrieben wird. Dies erfolgt durch Erhitzen des Gemisches auf Temperaturen von 60 bis 100 °C und gleichzeitiges Anlegen von Vakuum. Erst wenn das Wasser abdestilliert ist, darf die nachfolgende Phosphorylierungs- und Carbamidierungsreaktion eingeleitet werden, die durch Erhitzen des Gemisches auf eine Temperatur von 125 bis 155 °C bei gleichzeitigem Anlegen eines Vakuums unter Einhaltung einer Reaktionszeit von mindestens 15 Minuten erfolgt. Die Durchführung dieser Reaktion unter Vakuum führt zu einer Reihe von entscheidenden Vorteilen. Von großer Bedeutung ist die gegenüber der Durchführung unter Normaldruck mögliche Absenkung der Reaktionstemperatur um etwa 40°C. Dadurch werden Nebenreaktionen von Phosphorsäure oder Ammoniumphosphat und Harnstoff deutlich vermindert sowie Zersetzungsreaktionen der cellulosehaltigen Fasermaterialien unterdrückt. So ist es möglich, die Einsatzmengen der Reaktionskomponenten Harnstoff und Phosphorsäure oder Ammoniumphosphat zu verringern.

Infolge der niedrigen Reaktionstemperaturen und der geringen Einsatzmengen an Phosphorsäure bzw. Ammoniumphosphat und Harnstoff wird eine schonende Behandlung des cellulosehaltigen Materials während der Durchführung der Phosphorylierung und Carbamidierung gewährleistet. Dadurch bleiben die Strukturen und mechanischen Eigenschaften der cellulosehaltigen Fasermaterialien bei der Umsetzung weitgehend erhalten, was für die Papier- oder Vlieserzeugung sehr wichtig ist. Weiterhin ist es wichtig, Reaktionszeiten von mindestens 15 Minuten einzuhalten. Bei geringeren Reaktionszeiten wird z.B. die eingesetzte Phosphorsäure unvollständig umgesetzt, und insbesondere ist der Stickstoffgehalt zu niedrig. Außerdem hat sich herausgestellt, daß nach zu langen Reaktionszeiten, d.h. oberhalb vier Stunden, die Sorptionskapazität deutlich nachläßt, wobei offensichtlich die bekannten Kondensationsreaktionen der Phosphatgruppen untereinander zu Diphosphaten usw. ablaufen.

Nach Beendigung der Reaktionszeit wird das Reaktionsprodukt in an sich bekannter Weise auf Normaltemperatur abgekühlt, und die Verunreinigungen werden ausgewaschen.

Als Phosphorsäure kann jede beliebige technische Qualität, insbesondere die handelsübliche 85 %ige , eingesetzt werden. An Stelle aller oder eines Teils der Phosphorsäure können auch äquivalente Mengen der Ammoniumphosphate eingesetzt werden. Harnstoff eignet sich vorzugsweise in prillierter Form, jedoch ist auch jede andere technische Handelsware geeignet.

Entsprechend der vorgeschlagenen Verfahrensweise führen bereits geringe Einsatzmengen an Harnstoff und Phosphorsäure oder Ammoniumphosphat zu Fasern mit hoher Sorptionsleistung. Dies betrifft sowohl die Sorptionskapazität als auch die Festigkeit, mit der insbesondere Schwermetalle gebunden werden.

Die Phosphorylierung und Carbamidierung von bereits hergestelltem bahnförmigem Filterpapier oder papierartigem Vliesstoff aus cellulosehaltigem Material erfolgt unter folgenden Bedingungen. Dieses Ausgangsmaterial wird mit einer Lösung von Phosphorsäure und/oder Ammoniumphosphat und Harnstoff in Wasser in einem Molverhältnis Harnstoff zu Phosphor von 2,5 : 1 bis 4,5 : 1 behandelt, wobei die Wassermenge so eingestellt wird, daß im cellulosehaltigen Ausgangsmaterial 1 bis 8 Mol Phosphor je kg Cellulose verbleiben. Das Ausgangsmaterial kann ein- oder beidseitig durch Bestreichen mit der Lösung behandelt werden oder wird innerhalb einer taktweise arbeitenden Anlage in einem Lösungsbad getränkt.

Durch eine nachfolgende Vakuumbehandlung bei gleichzeitiger Erwärmung des Ausgangsmaterials auf eine Temperatur von 60 bis 100 °C wird das Wasser vollständig ausgetrieben. Danach erfolgt die Phosphorylierung und Carbamidierung, ebenfalls unter Vakuum und bei einer Temperatur 125 bis 155 °C, während einer Reaktionszeit von mindestens 15 Minuten. Das Vakuum wird vorzugsweise jeweils auf einen Wert von 5,33 kPa bis 26,66 kPa eingestellt.

Das phosphorylierte und carbamidierte Ausgangsmaterial wird anschließend abgekühlt, phosphatfrei gewaschen und abschließend getrocknet. Aus dem modifizierten Filterpapier bzw. Vliesstoff werden dann in an sich bekannter Weise die jeweiligen Filter durch Ausstanzen, Falten und Wickeln hergestellt.

Bei Filtern, die im Trinkwasserbereich eingesetzt werden, wird vor dem Waschen und Trocknen des phosphorylierten und carbamidierten cellulosehaltigen Materials die vorliegende Ammonium-Form durch Behandlung mit einer Kochsalzlösung in die Natrium-Form überführt. Die Behandlung erfolgt entweder an modifizierten Fasern vor der eigentlichen Papierherstellung oder an dem modifizierten Filterpapier bzw. dem Vliesstoff.

### Beispiel 1

100 g als pappartige Bahnen vorliegende Baumwoll-Linters (Linters 503 der Fa. Buckeye Mephis) wurden in Stücke zerschnitten und mit einer bei 60 °C erzeugten Lösung aus 74,7 ml Wasser, 61,4g 85 %iger Phosphorsäure und 111,3 g Harnstoff in einer Schale übergossen und des öfteren umgeschwenkt. Nachdem die Lösung vollständig und gleichmäßig aufgesogen war, wurde luftdicht abgedeckt und eine Stunde bei Zimmertemperatur aufbewahrt. Anschließend wurde die Schale in einen Vakuumtrockenschrank gestellt, ein Vakuum von 5,33 kPa angelegt und bei 90 bis 100 °C getrocknet. Als kein Wasserdampf mehr abzusaugen war, wurde die Temperatur auf 140 °C gesteigert und 1,5 Stunden gehalten, wobei das Vakuum aufrechterhalten wurde. Es ergaben sich 191,8 g eines äußerlich unveränderten Reaktionsproduktes, das in Wasser angerührt, abfiltriert und bis zur Phosphatfreiheit des Waschwassers gewaschen wurde. Das Produkt wurde im Trockenschrank bei 110°C getrocknet, wobei sich 149,3 g Ausbeute ergaben. Eine Probe des so gewonnenen Fasermaterials wurde durch Waschen mit konzentrierter Kochsalzlösung von der Ammonium-Form in die Natrium-Form überführt, salzfrei gewaschen und anschließend getrocknet. Die Elementaranalyse dieser Probe ergab einen Phosphorgehalt von 5,6 Masse% und einen Stickstoffgehalt von 1,3 Masse%.

Das so hergestellte Fasermaterial wurden nachfolgend auf seine Sorptionseigenschaften untersucht.

Die Bestimmung der Sorptionsgleichgewichtsdaten erfolgte nach folgender Methode: 250 ml Maßkolben wurden mit den Faserproben (0,1 bis 0,025 g) und jeweils 1 bis 5 ml m/10 Lösungen von Salzen der Metalle Cu, und Ca beschickt, aufgefüllt, mit Magnetrührstab versehen und 3 Stunden bei Zimmertemperatur gerührt. Nach dem Absitzen wurden die Lösungen dekantiert, ihr pH bestimmt und komplexometrisch ihr Metallgehalt ermittelt. Aus den so erhaltenen Gleichgewichtskonzentrationen in der Lösung und der durch die Zugabe von Metallsalzlösungen festgelegten Ausgangskonzentrationen wurden die Gleichgewichtskonzentrationen an der Faser errechnet. Durch Zugabe entsprechender Mengen Salpetersäure vor dem Auffüllen der Maßkolben wurde pH = 4,5 bei der Sorption eingestellt. Mehrere Kontrollmessungen der Gleichgewichtskonzentrationen in der Lösung mittels Atomabsorptionsspektroskopie (AAS) ergaben Abweichungen im Bereich der Meßgenauigkeit und bestätigten so die Verläßlichkeit komplexometrischer Analysen bei den Sorptionsuntersuchungen.

Die so ermittelte Sorptions-Kapazitäten betrug für Kupfer 100,1 mg Cu/g Faser und für Calcium 62,9 mg Ca/ g Faser.

Die Festigkeit der Sorption wurde an Hand der Gleichgewichtsdaten bei niedrigen Gleichgewichtskonzentrationen (unter 10 mg/l) in der Lösung bestimmt (ebenfalls bei Zimmertemperatur und pH 4,5). Zur besseren Übersichtlichkeit der Daten wurde der an sich übliche metallspezifische Gleichgewichtskoeffizient $K_{Me}$ nach der Formel

$$K_{Me} = C_S / C_I$$

berechnet.

Dabei ist $C_S$ die Gleichgewichtsmetallkonzentration im Sorbens in mg/g und $C_1$ die Gleichgewichtskonzentration an Metall in der Lösung in mg/l. Für die Faserprobe ergab sich

$$K_{Cu} = 47 \ l \ / \ g$$

Die Faserprobe wurde mit der gleichen Gewichtsmenge unbehandelter Baumwoll-Linters vermischt und in herkömmlicher Weise zu einem Filterpapier verarbeitet. Ein 1,5 g schweres Stück (12 cm Durchmesser) davon wurde zum Filtrieren von einem Liter eines Leitungswassers mit 10,1 °dH und einem Kupfergehalt von 0,3 mg /l benutzt. Es resultierte ein Filtrat mit 0,4 °dH und einem Kupfergehalt von 0,01 mg/l.

Beispiel 2

100 g Filterpapier bestehend aus Fichtenzellstoff für Laborzwecke, die als Blätter im A4-Format vorlagen, wurden auf eine Unterlage gelegt und gleichmäßig mit einer Lösung von 28,3 g Ammoniumphosphat und 50,9 g Harnstoff in 126 ml Wasser bestrichen, wobei die gesamte Lösungsmenge verbraucht wurde. Nach 30 Minuten wurden die Unterlagen mit den Blättern in einen Vakuumtrockenschrank gelegt, ein Vakuum von 6,67 kPa angelegt und durch Erwärmen auf 100 °C alles Wasser ausgetrieben. Es wurde binnen 30 Minuten auf 155 °C erhitzt, diese Temperatur 30 Minuten gehalten, dann rasch belüftet und abgekühlt. Es resultierten 137,7 g Produkt, das durch vorsichtiges Waschen unter Erhalt der ursprünglichen Form phosphatfrei gewaschen werden konnte. Nach dem Trocknen der Blätter bei 110 °C im normalen Trockenschrank resultierten 121,0 g behandeltes Filterpapier.

Die Elementaranalyse nach dem Überführen in die Na-Form wie in Beispiel 1 ergab einen Phosphorgehalt von 3,3 Masse% und einen Stickstoffgehalt von 1,9 Masse%. Die analog Beispiel 1 ermittelte Sorptionskapazität ergab für Kupfer 66,7 mg Cu / g Filter und für Calcium 44,1 mg Ca / g Filter. Der Gleichgewichtskoeffizient für Kupfer beträgt

$$K_{Cu} = 46 \ l \ / \ g.$$

Durch einen aus dem Produkt geschnittenen Rundfilter von 10 cm Durchmesser mit einem Gewicht von 1,9 g wurde 1 Liter Leitungswasser mit einer Härte von 16,2 °dH und 0,1 mg Kupfer /l filtriert. Das Filtrat wies nur noch eine Härte von 4,6 °dH auf und der Kupfergehalt war auf 0,005 mg Cu / l gesunken.

**Patentansprüche**

1. Filter aus Filterpapier oder papierartigem Vliesstoff, die teilweise oder vollständig aus faserförmigem cellulosehaltigern Material bestehen, **dadurch gekennzeichnet, daß** das cellulosehaltige Material zumindest teilweise mit Harnstoff carbamidiert und mit Phosphorsäure oder Ammoniumphosphat phosphoryliert ist, bis zu einem in Form von Carbamidgruppen vorliegenden Stickstoffgehalt von 1 bis 4 Masse% und einem Phosphorgehalt von 3 bis 8 Masse%.

2. Verfahren zur Herstellung von Filterpapier oder papierartigem Vliesstoff aus faserförmigem cellulosehaltigem Material für Filter nach Anspruch 1, **gekennzeichnet durch** folgende Verfahrensschritte:

   a) Aktivierung des cellulosehaltigen Materials, indem diesem Wasser in einer Menge von mindestens 30 Masse% des cellulosehaltigen Materials zugesetzt wird und dieser Feuchtigkeitsgehalt während einer Zeitdauer von mindestens einer halben Stunde aufrechterhalten wird,
   b) Zugabe von Phosphorsäure oder Ammoniumphosphat in einer Menge von 1 bis 8 Mol je kg wasserfreiem cellulosehaltigem Material,
   c) Zugabe von Harnstoff in einem Molverhältnis zu Phosphorsäure oder Ammoniumphosphat von 2,5:1 bis 4,5:1,
   d) Vermischen der Komponenten Harnstoff und Phosphorsäure oder Ammoniumphosphat mit dem aktivierten cellulosehaltigen Material, solange bis die Komponenten gleichmäßig verteilt sind,
   e) Verdampfen der in dem gemäß den Verfahrensschritten a) bis d) gebildeten Gemisch enthaltenen Feuchtigkeit **durch** Erhitzen des Gemisches auf eine Temperatur von 60 bis 100 °C bei gleichzeitigem Anlegen eines Vakuums,
   f) Durchführung einer Phosphorylierung und Carbamidierung **durch** Erhitzen des Gemisches auf eine Temperatur von 125 bis 155 °C bei gleichzeitigem Anlegen eines Vakuums unter Einhaltung einer Reaktionszeit von mindestens 15 Minuten und
   g) Abkühlung des Reaktionsproduktes auf Normaltemperatur und Auswaschen der Verunreinigungen.

3. Verfahren nach Anspruch 2, **dadurch gekennzeichnet, daß** zur Aktivierung 30 bis 100 Masse% Wasser zugesetzt werden und dieser Feuchtigkeitsgehalt während einer Zeitdauer von mindesten einer Stunde aufrechterhalten wird und die Phosphorylierung und Carbamidierung durch Erhitzen des Gemisches auf eine Temperatur von 125 bis 145 °C bei gleichzeitigem Anlegen des Vakuums unter Einhaltung einer Reaktionszeit von ein bis vier Stunden durchgeführt wird.

4. Verfahren nach einem der Ansprüche 2 oder 3, **dadurch gekennzeichnet, daß** dem aktivierten cellulosehaltigen Material zuerst die Phosphorsäure oder Ammoniumphosphat zugesetzt und gleichmäßig verteilt wird und anschließend der Harnstoff.

5. Verfahren nach einem der Ansprüche 2 bis 4, **dadurch gekennzeichnet, daß** die Mischzeiten zum Einmischen der Phosphorsäure oder Ammoniumphosphat und des Harnstoffes jeweils mindestens 15 min betragen.

6. Verfahren nach einem der Ansprüche 2 bis 5, **dadurch gekennzeichnet, daß** die Reaktionskomponenten Phosphorsäure oder Ammoniumphosphat und Harnstoff bei Raumtemperatur mit dem cellulosehaltigen Material vermischt werden.

7. Verfahren nach einem der Ansprüche 2 bis 6, **dadurch gekennzeichnet, daß** Phosphorsäure oder Ammoniumphosphat und/oder Harnstoff mit der zur Aktivierung bestimmten Wassermenge vermischt werden und die so erhaltende Lösung zur Aktivierung mit dem cellulosehaltigen Material vermischt wird.

8. Verfahren nach Anspruch 7, **dadurch gekennzeichnet, daß** das Vermischen der Phosphorsäure oder Ammoniumphosphat und/oder des Harnstoffes mit dem Wasser unter Erwärmen auf Temperaturen bis zu 60 °C durchgeführt wird.

9. Verfahren nach einem der Ansprüche 7 oder 8, **dadurch gekennzeichnet, daß** das cellulosehaltige Material vor der Aktivierung auf die Temperatur der Lösung von Harnstoff und/oder Phosphorsäure oder Ammoniumphosphat in Wasser erwärmt wird.

10. Verfahren nach einem der Ansprüche 2 bis 9, **dadurch gekennzeichnet, daß** das cellulosehaltige Material aus einem Gemisch verschiedener Cellulosen gebildet wird.

11. Verfahren nach Anspruch 2, **gekennzeichnet durch** folgende Verfahrensschritte:

a) Herstellung von cellulosehaltigern Filterpapier oder papierartigem Vliesstoff als bahn- oder blattförmiges Ausgangsmaterial in an sich bekannter Weise,
b) Behandeln des nach Verfahrensschritt a) erhaltenen Ausgangsmaterials mit einer Lösung von Harnstoff und Phosphorsäure und/oder Ammoniumphosphat in Wasser in einem Molverhältnis Harnstoff zu Phosphor von 2,5 : 1 bis 4,5 : 1, wobei die Wassermenge so eingestellt wird, daß im cellulosehaltigen Ausgangsmaterial 1 bis 8 Mol Phosphor je kg Cellulose verbleiben, und zur Aktivierung des Ausgangsmaterials der Wassergehalt während einer Zeitdauer von mindestens ½ Stunde aufrechterhalten wird.
c) einer nachfolgenden Vakuumbehandlung und Erwärmung des Ausgangsmaterials auf eine Temperatur von 60 bis 100 °C, um das Wasser vollständig auszutreiben,
d) Durchführung einer Phosphorylierung und Carbamidierung des gemäß den Verfahrensschritten b) und c) behandelten Ausgangsmaterials bei einer Temperatur von 125 bis 155 °C unter Vakuum und während einer Reaktionszeit von mindestens 15 Minuten und
e) anschließendem Abkühlen und phosphatfrei Waschen und abschließendem Trocknen des behandelten Ausgangsmaterials.

12. Verfahren nach einem der Ansprüche 2 bis 11, **dadurch gekennzeichnet, daß** das angelegte Vakuum auf einen Wert von 5,33 kPa bis 26,66 kPa eingestellt wird.

13. Verfahren nach einem der Ansprüche 2 bis 12, **dadurch gekennzeichnet, daß** das phosphorylierte und carbamidierte cellulosehaltige Fasermaterial vor dem Waschen und Trocknen durch Behandlung mit einer Kochsalzlösung von der Ammonium-Form in die Natrium-Form umgewandelt wird.

**Claims**

1. Filter made from filter paper or paper-like non-woven material consisting partly or wholly of fibrous, cellulose-containing material, **characterised in that** the cellulose-containing material has been carbamidated at least partly with urea and phosphorylated with phosphoric acid or ammonium phosphate until a nitrogen content in the form of carbamide groups of 1 to 4% by mass and a phosphorus content of 3 to 8% by mass have been reached.

2. Process for manufacturing filter paper or paper-like non-woven material from fibrous, cellulose-containing material for filters according to claim 1, **characterised by** the following process steps:

a) activation of the cellulose-containing material by adding to it an amount of water equal at least to 30% by mass of the cellulose-containing material and maintaining this moisture content for a period of at least half an hour,
b) addition of 1 to 8 mols of phosphoric acid or ammonium phosphate to each kg of anhydrous, cellulose-containing material,

c) addition of urea at a molar ratio to phosphoric acid or ammonium phosphate of 2.5:1 up to 4.5: 1,

d) mixing the components, urea and phosphoric acid or ammonium phosphate with the activated, cellulose-containing material until the components have been evenly distributed,

e) evaporation of the moisture contained in the mixture produced in accordance with the process steps a) to d) by heating the mixture to a temperature of 60°C to 100°C, whilst simultaneously applying a vacuum,

f) carrying out phosphorylation and carbamidation by heating the mixture to a temperature of 125°C to 155°C, whilst simultaneously applying a vacuum and maintaining a reaction time of at least 15 minutes and

g) cooling the reaction product to normal temperature and washing out the impurities.

3. Process according to claim 2, **characterised in that** for activation 30 to 100% water by mass is added and this moisture content is maintained during a period of at least an hour and the phosphorylation and carbamidation are carried out by heating the mixture to a temperature of 125°C to 145°C, whilst simultaneously applying a vacuum and maintaining a reaction time of one to four hours.

4. Process according to one of the claims 2 or 3, **characterised in that** firstly the phosphoric acid or ammonium phosphate is added to the activated, cellulose-containing material and evenly distributed and then the urea.

5. Process according to one of the claims 2 to 4, **characterised in that** the mixing times for admixing the phosphoric acid or ammonium phosphate and the urea each amount to at least 15 minutes.

6. Process according to one of the claims 2 to 5, **characterised in that** the reaction components, phosphoric acid or ammonium phosphate and urea are mixed at room temperature with the cellulose-containing material.

7. Process according to one of the claims 2 to 6, **characterised in that** phosphoric acid or ammonium phosphate and/or urea are mixed with the quantity of water intended for the activation and the resultant solution mixed with the cellulose-containing material for the activation.

8. Process according to claim 7, **characterised in that** the mixing of the phosphoric acid or ammonium phosphate and/or urea with the water is carried out under heating to temperatures of up to 60°C.

9. Process according to one of the claims 7 or 8, **characterised in that** the cellulose-containing material is heated in water before activation to the temperature of the solution of urea and/or phosphoric acid or ammonium phosphate.

10. Process according to one of the claims 2 to 9, **characterised in that** the cellulose-containing material is formed from a mixture of different cellusoses.

11. Process according to claim 2, **characterised by** the following process steps:

a) manufacture of cellulose-containing filter paper or paper-like non-woven material in the form of a web- or leaf-shaped starting material in a known manner,

b) treating the starting material produced in accordance with process step a) with a solution of urea and phosphoric acid and/or ammonium phosphate in water at a molar ratio of urea to phosphorus from 2.5: 1 to 4.5: 1, whereby the amount of water is adjusted in such a way that 1 to 8 mols of phosphorus per kg cellulose remain in the cellulose-containing starting material and the water content is maintained during a period of at least half an hour for activation of the starting material,

c) a subsequent vacuum treatment and heating of the starting material to a temperature of 60°C to 100°C to expel the water completely,

d) carrying out phosphorylation and carbamidation of the starting material treated in accordance with process steps b) and c) at a temperature of 125°C to 155°C under a vacuum and during a reaction time of at least 15 minutes and

e) subsequent cooling and washing free of phosphate and subsequent drying of the treated starting material.

12. Process according to one of the claims 2 to 11, **characterised by** the fact by the fact that the vacuum applied is adjusted to a value of 5.33 kPA to 26.66 kPa.

13. Process according to one of the claims 2 to 12, **characterised in that** the phosphorylated and carbamidated cellulose-containing fibre material are converted from the ammonium to the sodium form by treatment with a saline solution before washing and drying.

**Revendications**

1. Filtres se composant de papier filtrant ou de nontissé de type papier qui sont composés en partie ou entièrement d'un matériau cellulosique en forme de fibres, **caractérisé en ce que** le matériau cellulosique fait l'objet d'une carbamylation au moins en partie avec de l'urée et d'une phosphorylation avec de l'acide phosphorique ou du phosphate d'ammonium, jusqu'à une teneur en azote disponible sous forme de groupes carbamyles comprise entre 1 et 4% du poids et d'une teneur en phosphore comprise entre 3 et 8% du poids.

2. Procédé pour la fabrication de papier filtrant ou de non-tissé de type papier à partir de matériau cellulosique en forme de fibres destiné à des filtres selon la revendication 1, **caractérisé par** les étapes de procédé suivantes :

a) activation du matériau cellulosique en y ajoutant de l'eau dans une quantité s'élevant à au moins 30 % du poids du matériau cellulosique et en maintenant cette teneur en humidité pendant une durée d'au moins une demie heure,
b) ajout d'acide phosphorique ou de phosphate d'ammonium dans une quantité comprise entre 1 et 8 mol par kg de matériau cellulosique exempt d'eau,
c) ajout d'urée dans un rapport moléculaire par rapport à l'acide phosphorique ou au phosphate d'ammonium compris entre 2,5:1 et 4,5:1,
d) mélange des composants urée et acide phosphorique ou phosphate d'ammonium avec le matériau cellulosique activé jusqu'à ce que les composants soient répartis de façon homogène,
e) évaporation de l'humidité contenue dans le mélange formé selon les étapes de procédé a) à d) en portant le mélange à une température comprise entre 60 et 100°C en appliquant simultanément un vide d'air,
f) réalisation d'une phosphorylation et d'une carbamylation en portant le mélange à une température comprise entre 125 et 155°C en appliquant simultanément un vide d'air en respectant une durée de réaction d'au moins 15 minutes et
g) refroidissement du produit de la réaction jusqu'à une température normale et lavage des impuretés.

3. Procédé selon la revendication 2, **caractérisé en ce que**, pour activer 30 à 100 % du poids, on ajoute de l'eau, et cette teneur en humidité est maintenue pendant une durée d'au moins une heure, et la phosphorylation et la carbamylation sont réalisées en portant le mélange à une température comprise entre 125 et 145°C en appliquant simultanément un vide d'air en respectant une durée de réaction comprise entre une et quatre heures.

4. Procédé selon l'une quelconque des revendications 2 ou 3, **caractérisé en ce qu'**on ajoute d'abord l'acide phosphorique ou le phosphate d'ammonium au matériau cellulosique activé en le répartissant de façon homogène, et on ajoute en dernier l'urée.

5. Procédé selon l'une quelconque des revendications 2 à 4, **caractérisé en ce que** les durées de mélange nécessaires au mélange de l'acide phosphorique ou du phosphate d'ammonium et de l'urée sont à chaque fois d'au moins 15 min.

6. Procédé selon l'une quelconque des revendications 2 à 5, **caractérisé en ce que** les composants de la réaction acide phosphorique ou phosphate d'ammonium et urée sont mélangés au matériau cellulosique à température ambiante.

7. Procédé selon l'une quelconque des revendications 2 à 6, **caractérisé en ce que** l'acide phosphorique ou le phosphate d'ammonium et/ou l'urée sont mélangés à la quantité d'eau nécessaire à l'activation, et la solution ainsi obtenue destinée à l'activation est mélangée au matériau cellulosique.

8. Procédé selon la revendication 7, **caractérisé en ce que** le mélange de l'acide phosphorique ou du phosphate d'ammonium et/ou de l'urée à l'eau est réalisé en le portant à des températures allant jusqu'à 60°C.

9. Procédé selon l'une quelconque des revendications 7 ou 8, **caractérisé en ce que** le matériau cellulosique est porté, avant son activation, dans l'eau à la température de la solution d'urée et/ou d'acide phosphorique ou de phosphate d'ammonium.

10. Procédé selon l'une quelconque des revendications 2 à 9, **caractérisé en ce que** le matériau cellulosique est formé par un mélange de diverses celluloses.

11. Procédé selon la revendication 2, **caractérisé par** les étapes de procédé suivantes :

a) fabrication de papier filtrant cellulosique ou de non-tissé de type papier sous forme de matériau initial en forme de feuille ou de bande d'une façon connue en soi,
b) traitement du matériau initial obtenu selon l'étape de procédé a) avec une solution d'urée et d'acide phosphorique et/ou de phosphate d'ammonium dans de l'eau dans un rapport moléculaire d'urée par rapport au phosphore de 2,5:1 à 4,5:1, la quantité d'eau étant telle qu'il reste 1 à 8 mol de phosphore par kg de cellulose dans le matériau initial cellulosique, et pour activer le matériau initial, la teneur en eau est maintenue pendant une durée d'au moins une ½ heure,
c) suivi d'un traitement au vide d'air et réchauffement du matériau initial jusqu'à une température comprise entre 60 et 100°C afin d'évacuer entièrement l'eau,

d) réalisation d'une phosphorylation et d'une carbamylation du matériau initial traité selon les étapes de procédé b) et c) à une température comprise entre 125 et 155°C sous vide d'air et pendant une durée de réaction d'au moins 15 minutes et

e) suivi d'un refroidissement et d'un lavage sans phosphate se terminant par le séchage du matériau initial traité.

**12.** Procédé selon l'une quelconque des revendications 2 à 11, **caractérisé en ce que** la valeur du réglage du vide d'air appliqué est comprise entre 5,33 kPa et 26,66 kPa.

**13.** Procédé selon l'une quelconque des revendications 2 à 12, **caractérisé en ce qu'**avant son lavage et son séchage, le matériau fibreux cellulosique ayant subi une phosphorylation et une carbamylation passe de la forme ammonium à la forme sodium grâce à un traitement avec une solution de chlorure de sodium.